Europäisches Patentamt

European Patent Office

Office européen des brevets

(11) Numéro de publication: **0 182 706**
**B1**

(12) **FASCICULE DE BREVET EUROPÉEN**

(19)

(45) Date de publication du fascicule du brevet:
19.04.89

(21) Numéro de dépôt: **85402178.9**

(22) Date de dépôt: **12.11.85**

(51) Int. Cl.⁴: **B 01 D 53/34, F 23 J 15/00**

54 **Procédé de captation par voie semi-sèche de polluants contenus dans des fumées.**

(30) Priorité: **12.11.84 FR 8417209**

(43) Date de publication de la demande:
**28.05.86 Bulletin 86/22**

(45) Mention de la délivrance du brevet:
**19.04.89 Bulletin 89/16**

(84) Etats contractants désignés:
**AT BE CH DE GB IT LI NL SE**

(56) Documents cité:
**EP-A-0 022 367
DE-A-1 542 314
DE-A-1 669 315
US-A-3 851 042
US-A-4 277 450**

(73) Titulaire: **SYPRIM AIR INDUSTRIE
ENVIRONNEMENT, 31, Boulevard de la Paix,
F-78100 Saint Germain en Laye (FR)**

(72) Inventeur: **Remilleux, Jean, 98, avenue de Paris,
F-78000 Versailles (FR)**

(74) Mandataire: **Jacquelin, Marc- Henri, Cabinet
PLASSERAUD 84, rue d'Amsterdam, F-75009 Paris
(FR)**

## Description

La présente invention concerne un procédé de captation par voie semi-sèche de polluants acides contenus dans des fumées, en particulier d'anhydride sulfureux, par un produit de traitement basique pulvérulent, du type dans lequel lesdites fumées sont mises en contact intime avec ledit produit, pour que ce dernier adsorbe par réaction chimique les polluants contenus dans les fumées, après quoi on effectue une séparation entre les gaz traités et le produit ayant servi au traitement, les gaz épurés pouvant alors être évacués a l'atmosphère.

Les fumées en question pourront être notamment émises par des chaudières industrielles de combustion de charbon contenant du soufre, comme c'est le cas par exemple du charbon de Gardanne, dont la combustion donne, sans traitement, des gaz dont la concentration en $SO_2$ est de l'ordre de 4 000 ppm. Il convient bien entendu de traiter de tels gaz avant de les laisser s'échapper à l'atmosphère.

Le contact intime entre les fumées et le produit basique pulvérulent, notamment la chaux, peut être réalisé dans un lit fluidisé réalisé à partir des particules de ce produit, lit qui est alors traversé par les fumées à traiter, mais ce type de procédé présente l'inconvénient de nécessiter un temps de séjour élevé, avec des rendements qui restent limités (f. US-A-4 277 450).

Selon un autre procédé, on utilise des atomiseurs dudit produit pulvérulent en suspension dans l'eau, que l'on met en oeuvre dans des tours de réaction, mais ce procédé nécessite une évaporation d'eau importante, d'où résulte également un refroidissement important des gaz, et les installations nécessaires sont coûteuses et encombrantes (f. US-A-3 851 042).

Le but de l'invention est de remédier aux inconvénients des procédés connus, et, à cet effet, elle a pour objet un procédé du type général défini au début, essentiellement caractériséce que l'on ajoute au produit sec une quantité d'eau, de l'ordre de 5 à 15 % par rapport au poids du produit c.à. d. une quantité d'eau suffisamment faible pour qu'il reste essentiellement pulvérulent, avant de le mettre en suspension dans un écoulement ascendant desdites fumées, réalisé dans une colonne de réaction et de séchage.

Ces colonnes sont déjà connues dans certaines applications; il s'agit de colonnes verticales de grande hauteur, parcourues par un écoulement ascendant rapide des fumées à traiter. Le produit réactif pulvérulent est mis en suspension à la base de la colonne, en étant déversé et dispersé en aval du col d'un convergent-divergent de mise en suspension.

Le fait, conformément à l'invention, d'ajouter de l'eau au produit basique pulvérulent avant de le mettre en suspension dans la colonne permet d'activer les réactions entre ce produit et les fumées acides pendant leur ascension conjointe dans la colonne, et ceci sans refroidissement excessif des fumées, ce qui se produirait si l'on introduisait une suspension de réactif dans l'eau en amont du convergent-divergent précité. En effet, dans ce dernier cas, la quantité d'eau par rapport au réactif étant très importante, le refroidissement serait également trop important, compte tenu de la température des fumées (environ 150°C à la sortie d'une chaudière).

Au contraire, grâce à l'invention on peut n'utiliser qu'une quantité relativement réduite d'eau, qu'il s'agisse d'un produit de traitement frais ou d'un mélange avec du produit recyclé, c'est-à-dire ayant déjà servi au traitement.

Avec une telle quantité, la réaction entre la chaux et l'anhydride sulfureux contenu dans les fumées serait suffisante, tandis que le refroidissement des gaz serait relativement faible, de l'ordre de 25°C seulement. De plus, on reste loin de la saturation des fumées en eau, ce qui évite tout risque de condensation dans la colonne. L'eau est amenée uniquement à l'endroit où elle est utile.

Quant au recyclage, en soi connu, à la base de la colonne de réaction, de la chaux ayant déjà servi au traitement, il permettra d'obtenir un rendement élevé d'utilisation de la chaux, de l'ordre de 80 %, avec un rendement de désulfuration pouvant atteindre au moins 90 %.

En outre, lorsque les poussières contenues dans les fumées sont basiques, ce qui est le cas lorsque l'on brûle le charbon de Gardanne, le recyclage des poussières, en même temps que du produit pulvérulent ayant déjà servi au traitement, permettra de réaliser une économie substantielle sur le produit frais d'appoint en l'occurrence sur la chaux. Par exemple, pour un gaz à la température de 150°C et contenant 4 000 ppm de $SO_2$, la quantité de chaux d'appoint pourrait être de 10 à 20 g/Nm3, la quantité de chaux et de cendres recyclées de l'ordre de 80 g/Nm3, et l'appoint d'eau de 10 g/Nm3, ce qui conduirait à une température des gaz à la sortie de la séparation de l'ordre de 125°C.

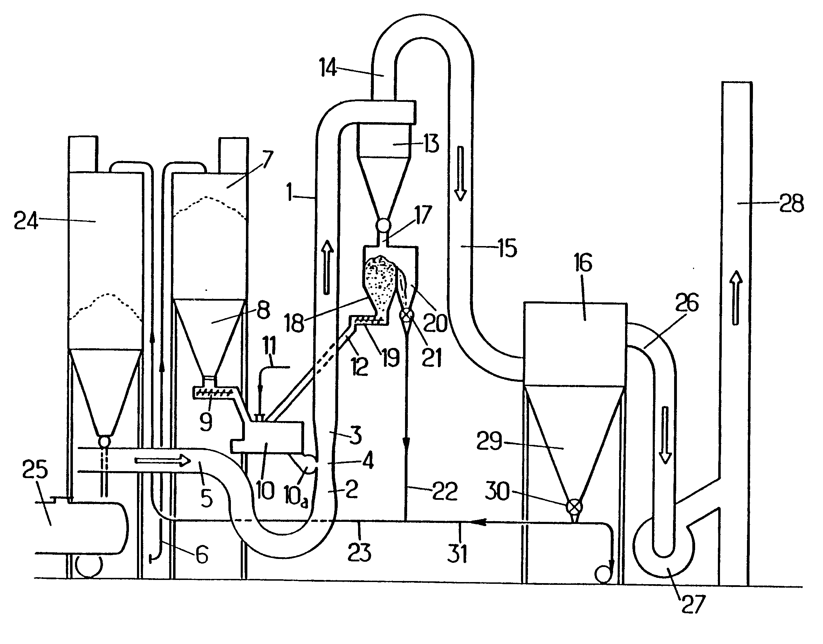

Une installation pouvant être utilisée pour la mise en oeuvre d'un procédé conforme à l'invention va maintenant être décrite à titre d'exemple nullement limitatif, avec référence à la figure unique du dessin ci-annexé.

Dans l'installation, la colonne de réaction et de séchage, essentiellement verticale, a été référencée 1 et présente à sa base un convergent-divergent 2 - 3, le produit de traitement pulvérulent étant introduit dans la colonne au niveau du col 4 de ce convergent-divergent. Les fumées à traiter, provenant par exemple d'une chaudière de combustion de charbon contenant du soufre, sont introduites à la base de la colonne 1 par une conduite d'amenée 5. Le produit de traitement, à savoir de la chaux pulvérulente, est introduit dans la colonne, par une conduite 6, un réservoir de stockage 7 et une trémie 8 au fond de laquelle la chaux est prélevée par une vis doseuse 9. Avant introduction au niveau du col 4 du convergent-divergent de la colonne, la chaux est humidifiée dans une installation 10 alimentée en eau sous un débit bien déterminé par une conduite d'amenée 11. Comme indiqué plus haut, une proportion caractéristique entre l'eau et la chaux pourra être d'environ 10 % en poids d'eau par rapport au poids de la chaux, soit environ 10 g d'eau par Nm3 de fumées à 150°C et contenant de l'ordre de 4 000 ppm de $SO_2$, étant entendu que la chaux humidifiée sera constituée en principe d'une partie de chaux pure, provenant du réservoir 7, et d'une partie chaux recyclée, cette dernière étant amenée à l'installation 10 par une conduite de recyclage 12. Ainsi, pour une quantité de chaux d'appoint de 10 à 20 g/Nm3 de fumées, la quantité de chaux (en mélange avec des cendres) recyclée pourra être de l'ordre de 30 g/Nm3. Cette disposition permet bien entendu d'économiser la chaux d'appoint amenée par la conduite 6 et de faire en sorte que cette chaux soit utilisée au maximum pour l'absorption de l'anydride sulfureux contenu dans les fumées.

Pour que la chaux soit répartie de façon parfaitement homogène dans la colonne de réaction, un disperseur 10a est d'ailleurs introduit entre l'installation 10 et le col 4 du convergent-divergent 3.

La sortie de la colonne de réaction 1 est connectée à un cyclone séparateur 13 dont la sortie "gaz" 14 est reliée par une conduite 15 à un dépoussiéreur 16, par exemple un électrofiltre, la sortie "matière" du cyclone 13, référencée 17, alimentant une trémie 18 reliée par une autre vis doseuse 19 à la conduite de recyclage précitée 12.

Par une trémie 20 alimentée par le cyclone et une vanne doseuse 21, une proportion déterminée des cendres et du produit de traitement séparé des fumées peut être évacuée par des conduites 22 et 23, puis être stockée dans un silo 24. Le mélange de sulfate et de cendres amené à ce silo peut, à intervalles de temps déterminés, être évacué par un véhicule 25.

Quant à la sortie "gaz" 26 de l'électrofiltre 16, elle est reliée par une soufflante 27 à une cheminée d'évacuation de fumées traitées 28. Les fines poussières s'accumulant dans la trémie 29 de l'électrofiltre peuvent également être transférées au silo d'évacuation 24 par une vanne doseuse 30 et une conduite 31 reliée aux conduites précitées 22 - 23. Ces conduites 22 - 23 et 31 peuvent être avantageusement du type à transport pneumatique.

Il est à noter que la proportion d'eau ajoutée dans l'installation 10 à la chaux, c'est-à-dire au mélange de chaux d'appoint et de chaux recyclée avec les cendres, est relativement peu importante (10 % par rapport au poids du produit sec), ce qui, grâce en outre au disperseur précité 10a, permet d'introduire dans la colonne 1 un produit de traitement encore sous forme de poudre, sans agglomérat, l'installation 10 pouvant d'ailleurs être pourvue de moyens spéciaux à cet effet. Cela permet d'obtenir une excellente répartition du produit de traitement sur toute la hauteur de la colonne à partir du convergent-divergent 2 - 3, et sans refroidissement excessif de la suspension.

## Revendications

1. Procédé de captation par voie semi-sèche de polluants acides contenus dans des fumées, en particulier d'anhydride sulfureux, par un produit de traitement basique pulvérulent, du type dans lequel lesdites fumées sont mises en contact intime avec ledit produit, pour que ce dernier adsorbe par réaction chimique les polluants contenus dans les fumées, après quoi on effectue une séparation entre les gaz traités et le produit ayant servi au traitement, les gaz épurés pouvant alors être évacués à l'atmosphère, caractérisé e ce que l'on ajoute au produit sec une quantité d'eau de l'ordre de 5 à 15 % par rapport au poids du produit c.à.d. une quantité d'éau suffisamment faible pour que le produit reste essentiellement pulvérulent, avant de le mettre en suspension dans un écoulement ascendant desdites fumées, réalisé dans une colonne de réaction et de séchage.

2. Procédé selon la revendication 1, caractérisé en ce que le produit de traitement est un mélange de produit basique pulvérulent frais et de produit recyclé, c'est-à-dire ayant déjà servi au traitement.

3. Procédé selon la revendication 2, caractérisé en ce que pour des fumées ayant une température de l'ordre de 150°C, et contenant de l'ordre de 4 000 ppm d'anhydride sulfureux, on utilise comme produit de traitement de la chaux d'appoint dans la proportion d'environ 10 à 20 g/Nm3 de fumées, en mélange avec de la chaux et des cendres recyclées, dans la proportion d'environ 80 g/Nm3 de fumées, l'appoint d'eau étant alors d'environ 10 g/Nm3 de fumées.

## Patentansprüche

1. Halbtrocknes Verfahren zur Abscheidung von in den Rauchgasen enthaltenden sauren Schadstoffen, insbesondere von Schwefligsäureanhydrid, mittels eines basischen, feinpulverigen Behandlungserzeugnisses, von der Art, bei der die Rauchgase in innigen Kontakt mit dem Erzeugnis gebracht werden, damit letzteres mittels chemischer Reaktion die in den Rauchgasen enthaltenden Schadstoffe adsorbiert, worauf eine Trennung zwischen den behandelten Gasen und dem Erzeugnis bewirkt wird, das zu der Behandlung gedient hat, wobei die gereinigten Gase nun in die Atmosphäre abgeführt werden können, dadurch gekennzeichnet, daß zu dem trockenen Erzeugnis eine Menge Wasser, in der Größe von 5 bis 15 % in bezug auf das Gewicht des Erzeugnisses, zugefügt wird, d. h. eine ausreichend geringe Wassermenge, damit das Erzeugnis im wesentlichen feinpulverig bleibt, bevor es in Suspension in eine aufsteigende Strömung der Rauchgase gebracht wird, die in einer Reaktions- und Trocknungssäule realisiert wird.

2. Verfahren nach Anspruch 1, dadurch gekennzeichnet, daß das Behandlungserzeugnis eine Mischung aus frischem basischen, feinpulverigen Erzeugnis und zurückgeführtem Erzeugnis ist, das heißt, das bereits zur Behandlung gedient hat.

3. Verfahren nach Anspruch 2, dadurch gekennzeichnet, daß für die Rauchgase, die eine Temperatur in der Größe von 150° C besitzen und Schwefeligsäureanhydrid in der Größe von 4.000 ppm enthalten, als Behandlungserzeugnis zusätzlicher Kalk in der Proportion von etwa 10 bis 20 g/Nm3 Rauchgasen in Mischung mit dem Kalk und zurückgeführten Verbrennungsrückständen, in der Proportion von etwa 80 g/Nm3 Rauchgasen verwendet wird, wobei der Wasserzusatz nun etwa 10 g/Nm3 Rauchgasen ist.

## Claims

1. Semi-dry process for eliminating acid pollutants contained in fumes, in particular sulphurous anhydride, by a basic pulverulent treatment product of the type in which the said fumes are brought into close contact with the said product, in order that the latter absorbs the pollutants contained in the fumes by chemical reaction after which separation takes place between the gases treated and the product used in the treatment, the purified gases then being capable of being discharged into the atmosphere, characterised in that a quantity of water comprised between about 5 and 15 % of the weight of the dry product is added to the dry product, i.e. a quantity of water small enough to keep the product in powder form, before suspending it in a rising stream of the said fumes, carried out in a reaction and drying column.

2. Process according to claim 1, characterized in that the treatment product is a mixture of fresh basic pulverulent product and recycled product, ie product already used in the treatment.

3. Process according to claim 2, characterized in that for fumes at a temperature in the region of 150 deg. C and containing in the region of 4000 ppm sulphurous anhydride, added lime is used as treatment product in a proportion of around 10 to 20 g/Nm3 of fumes, mixed with recycled lime and ashes in the proportion of around 80 g/Nm3 of fumes, the added water being then around 10g/Nm3 of fumes.